# EUROPEAN PATENT APPLICATION

(11) **EP 4 415 401 A1**
(43) Date of publication of application: **14.08.2024**
(21) Application number: 22881261.6
(22) Date of filing: 29.09.2022
(51) Int. Cl.: H04W 4/90, H04W 4/40, H04W 48/16, H04W 60/00, H04W 88/06

(54) **ELECTRONIC DEVICE AND METHOD FOR SENDING EMERGENCY CALL BY USING SAME**

(30) Priority: 15.10.2021 KR 20210137632
(71) Applicant: Samsung Electronics Co., Ltd., Suwon-si, Gyeonggi-do 16677 (KR)
(72) Inventor: JU, Seungbum, Suwon-si, Gyeonggi-do 16677 (KR); JANG, Changwon, Suwon-si, Gyeonggi-do 16677 (KR); LEE, Kijeong, Suwon-si, Gyeonggi-do 16677 (KR); JUN, Jaebum, Suwon-si, Gyeonggi-do 16677 (KR)
(74) Representative: Gulde & Partner
(86) International application number: PCT/KR2022/014672
(87) International publication number: WO 2023/063632

(57) **Abstract**

An electronic device is provided, including a first communication module including a first radio frequency (RF) transceiver and a second RF transceiver; and a controller configured to control an operation of the first communication module. The controller identifies at least one network supporting an emergency call, performs a first registration procedure using the first RF transceiver with respect to first frequency bands among a plurality of frequency bands available in the at least one network, according to a first priority, performs a second registration procedure using the second RF transceiver with respect to second frequency bands among the plurality of frequency bands, according to the first priority, and transmits the emergency call using a frequency band first identified as being capable of transmitting the emergency call through the first and second registration procedures based on the first priority among the first frequency bands and the second frequency bands.

## Description

### Technical Field

The disclosure relates to the field of in-vehicle electrical equipment. More particularly, the disclosure relates to an electronic device mounted on a vehicle to transmit an emergency call, and a method performed by the electronic device.

### Background Art

Emergency call (or eCall) systems assist with rapid rescue of a driver by automatically or manually requesting reports and relief within a car even in situations where the driver is unconscious or unable to make a call due to a traffic accident.

When a collision is detected by a sensor or a driver makes a request (for example, the driver presses a button to send an emergency call), a communication module mounted on a vehicle sends an emergency call to the Public Safety Answering Point (PSAP). At this time, information about the location of the accident, the type of vehicle, a driving direction, etc. is also transmitted to the PSAP, allowing the accident situation to be quickly communicated.

Emergency call systems are being implemented as a national project in Europe/Russia, and thus vehicles released in Europe/Russia after 2018 must be equipped with a communication module that supports an emergency call function.

In the conventional art, even when a communication module mounted on a vehicle uses a packet switched network, voice is transmitted through a circuit switched network due to circuit-switched fall back (CSFB) for an emergency call, and environmental data is transmitted through the packet switched network. However, because a next-generation eCall uses an IP multimedia subsystem (IMS) emergency call, voice and environmental data can be transmitted together through the packet switched network.

In most countries, the distribution rate of the packet switched network (e.g., a 4G network and a 5G network) is not as high as that of the circuit switched network (e.g. a 2G network and a 3G network), and therefore, in Europe/Russia, emergency call services through the 2G network and the 3G network were first mandated. Accordingly, if an accident occurs while a vehicle's communication module is registered in a 4G network or 5G network, the communication module must search the 2G network and the 3G network to make an emergency call connection.

In other words, in order to send an emergency call, a network capable of transmitting an emergency call must be searched, which may make it difficult to make a quick emergency call.

### Disclosure

### Technical Problem

Provided is an electronic device capable of quickly making an emergency call.

Provided is reliable transmission of an emergency call in consideration of the possibility of damage to an antenna due to an accident.

Provided is quick discovery of a frequency band for making an emergency call by considering various configurations that an electronic device for making an emergency call may have.

### Technical Solution

According to an embodiment, an electronic device mounted on a vehicle for transmitting an emergency call includes a first communication module including a first radio frequency (RF) transceiver and a second RF transceiver; and a controller configured to control an operation of the first communication module. The controller may identify at least one network supporting an emergency call, perform, according to a first priority, a first registration procedure using the first RF transceiver with respect to first frequency bands among a plurality of frequency bands available in the at least one network, perform, according to the first priority, a second registration procedure using the second RF transceiver with respect to second frequency bands among the plurality of frequency bands, and transmit the emergency call using a frequency band first identified as being capable of transmitting the emergency call through the first and second registration procedures based on the first priority among the first frequency bands and the second frequency bands.

### Advantageous Effects

According to an embodiment, provided is an electronic device capable of quickly making an emergency call.

According to an embodiment, an emergency call is reliably sent by taking into account the possibility of damage to an antenna due to an accident.

According to an embodiment, a frequency band for making an emergency call may be quickly discovered by taking into account various configurations that an electronic device for making an emergency call may have.

It should be noted that effects that can be achieved by an electronic device and an emergency call sending method performed by the electronic device, according to an embodiment, are not limited to those described above, and other effects not mentioned will be apparent to one of ordinary skill in the art from the following descriptions.

### Description of Drawings

A brief description of each drawing is provided for better understanding of the drawings cited herein.
FIG. 1 is a diagram of an emergency call system according to an embodiment.
FIG. 2 is a block diagram of a structure of an electronic device according to an embodiment.
FIG. 3 is a block diagram of a structure of a communication module according to an embodiment.
FIG. 4 is a diagram illustrating a registration procedure between an electronic device and a base station.
FIG. 5 is a table showing networks supporting emergency calls, frequency bands available in the networks, and a first priority.
FIG. 6 is a table showing networks supporting emergency calls, frequency bands available in the networks, and a second priority.
FIG. 7 is a block diagram of a structure of a communication module according to another embodiment.
FIG. 8 is a table showing service providers associated with a communication module, networks supporting emergency calls, frequency bands available in the networks, and a first priority.
FIG. 9 is a block diagram of a structure of an electronic device according to another embodiment.
FIG. 10 is a flowchart of a method of sending an emergency call, according to an embodiment.
FIG. 11 is a flowchart of a method of sending an emergency call, according to another embodiment.
FIG. 12 is a flowchart of a method of sending an emergency call when a frequency band capable of transmitting the emergency call has not been found according to the method shown in FIG. 10.
FIG. 13 is a diagram illustrating an operation performed using artificial intelligence (AI) technology, according to an embodiment.
FIG. 14 is a diagram illustrating an electronic device mounted on a vehicle, and a server, according to an embodiment.
FIG. 15 is a diagram illustrating a server and an electronic device operating in connection with the server.
FIG. 16 is a block diagram of a processor included in an electronic device according to an embodiment.
FIG. 17 is a block diagram of a data learner according to an embodiment.
FIG. 18 is a block diagram of a data recognizer according to an embodiment.
FIG. 19 is a block diagram illustrating an example in which an electronic device and a server interoperate to learn and recognize data, according to an embodiment.

### Best Mode

According to an embodiment, an electronic device mounted on a vehicle for transmitting an emergency call includes a first communication module including a first radio frequency (RF) transceiver and a second RF transceiver; and a controller configured to control an operation of the first communication module. The controller may identify at least one network supporting an emergency call, perform, according to a first priority, a first registration procedure using the first RF transceiver with respect to first frequency bands among a plurality of frequency bands available in the at least one network, perform, according to the first priority, a second registration procedure using the second RF transceiver with respect to second frequency bands among the plurality of frequency bands, and transmit the emergency call via a frequency band first identified as being capable of transmitting the emergency call through the first and second registration procedures based on the first priority among the first frequency bands and the second frequency bands.

When a frequency band capable of transmitting the emergency call is not identified through the first registration procedure and the second registration procedure based on the first priority, the controller may perform, according to the first priority, the first registration procedure using the first RF transceiver with respect to the second frequency bands and performs, according to the first priority, the second registration procedure using the second RF transceiver with respect to the first frequency bands.

When a frequency band capable of transmitting the emergency call is not identified through the first registration procedure and the second registration procedure based on the first priority, the controller may further perform the first registration procedure or the second registration procedure with respect to frequency bands different from the first frequency bands and the second frequency bands among frequency bands supported by the electronic device.

When a frequency band capable of transmitting the emergency call is not identified through the first registration procedure and the second registration procedure based on the first priority, the controller may determine a second priority, perform, according to the second priority, the first registration procedure with respect to the second frequency bands, and perform, according to the second priority, the second registration procedure with respect to the first frequency bands.

The controller may determine the second priority, based on a signal quality in the plurality of frequency bands, wherein the signal quality is confirmed through the first registration procedure and the second registration procedure based on the first priority.

The at least one network identified as supporting the emergency call may include a first network and a second network, the first frequency bands may be available in the first network, and the second frequency bands may be available in the second network.

The controller may perform, according to the first priority, the first registration procedure with respect to first frequency bands available in the first network provided by a first service provider, and may perform, according to the first priority, the second registration procedure with respect to second frequency bands available in the second network provided by a second service provider.

The controller may perform the first registration procedure and the second registration procedure alternately.

The electronic device may further include a second communication module including a third RF transceiver and a fourth RF transceiver. The controller may perform, according to the first priority, the first registration procedure with respect to the first frequency bands among a plurality of frequency bands available in at least one network provided by a first service provider related to the first communication module, perform, according to the first priority, the second registration procedure with respect to the second frequency bands among the plurality of frequency bands, perform, according to the first priority, a third registration procedure using the third RF transceiver with respect to third frequency bands among a plurality of frequency bands available in at least one network provided by a second service provider related to the second communication module, and perform, according to the first priority, a fourth registration procedure using the forth RF transceiver with respect to the fourth frequency bands among the plurality of frequency bands.

When a frequency band capable of transmitting the emergency call is not identified through the first registration procedure and the second registration procedure based on the first priority, the controller MAY transmit a request to send the emergency call to a mobile device of a passenger of the vehicle.

When sending the emergency call is determined as being necessary, while being registered in a predetermined type of network, the controller may determine whether the predetermined type of network supports the emergency call, and perform the first registration procedure and the second registration procedure based on the first priority, in response to the predetermined type of network not supporting the emergency call.

The predetermined type of network may include a packet switched network, and the at least one network may include a circuit switched network.

When an emergency call with an emergency call server is connected, the controller may transmit voice data of a passenger of the vehicle or environmental data of the vehicle to the emergency call server.

According to an embodiment, a method of sending an emergency call by an electronic device including a first radio frequency (RF) transceiver and a second RF transceiver includes identifying at least one network supporting the emergency call; performing, according to a pre-determined first priority, a first registration procedure using the first RF transceiver with respect to first frequency bands among a plurality of frequency bands available in the at least one network; performing, according to the pre-determined first priority, a second registration procedure using the second RF transceiver with respect to second frequency bands among the plurality of frequency bands; and transmitting the emergency call by using a frequency band first identified as being capable of transmitting the emergency call through the first and second registration procedures based on the first priority among the first frequency bands and the second frequency bands.

The method may further include, when a frequency band capable of transmitting the emergency call is not identified through the first registration procedure and the second registration procedure based on the first priority, performing, according to the first priority, the first registration procedure with respect to the second frequency bands and performing, according to the first priority, the second registration procedure with respect to the first frequency bands.

### Mode for Invention

As the disclosure allows for various changes and numerous embodiments, particular embodiments will be illustrated in the drawings and described in detail in the written description. However, this is not intended to limit the disclosure to particular modes of practice, and it is to be appreciated that all changes, equivalents, and substitutes that do not depart from the spirit and technical scope of the disclosure are encompassed in the disclosure.

In the description of embodiments of the disclosure, certain detailed explanations of the related art are omitted when it is deemed that they may unnecessarily obscure the essence of the disclosure. While such terms as "first," "second, "etc., may be used to describe various components, such components must not be limited to the above terms. The above terms are used only to distinguish one component from another.

When an element (e.g., a first element) is "coupled to" or "connected to" another element (e.g., a second element), the first element may be directly coupled to or connected to the second element, or, unless otherwise described, a third element may exist therebetween.

Regarding a component represented as a "portion (unit)" or a "module" used herein, two or more components may be combined into one component or one component may be divided into two or more components according to subdivided functions. In addition, each component described hereinafter may additionally perform some or all of functions performed by another component, in addition to main functions of itself, and some of the main functions of each component may be performed entirely by another component.

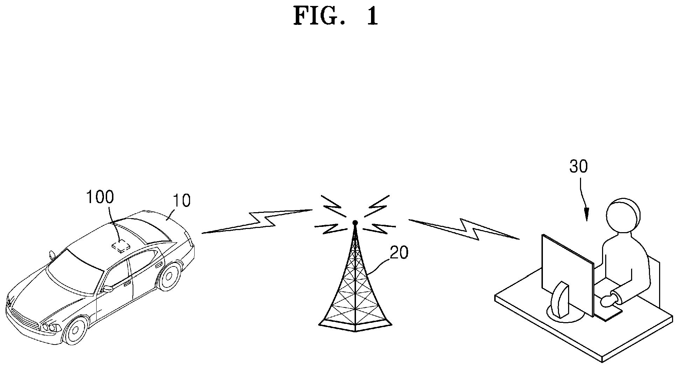

FIG. 1 is a diagram of an emergency call system according to an embodiment.

Referring to FIG. 1, the emergency call system according to an embodiment may include an electronic device 100 mounted on a vehicle 10, a base station 20, and a Public Safety Answering Point (PSAP) 30. The PSAP 30 may also be referred to as an emergency call server 30.

The electronic device 100 sends an emergency call to a preset number when an accident in the vehicle 10 is detected or upon a request from a passenger of the vehicle 10. The emergency call sent by the electronic device 100 may be sent to the emergency call server 30 through the base station 20, and communication between the electronic device 100 and the emergency call server 30 may be achieved according to a response by the emergency call server 30.

The electronic device 100 may transmit the passenger's voice data and/or environmental data (e.g., data indicating the location of the accident, the type or driving direction of the vehicle 10, etc.) to the emergency call server 30, and the emergency call server 30 may recognize an accident situation through the voice data and/or environmental data received from the electronic device 100 and perform rescue activities for the vehicle 10 and the passenger. As an example of the rescue activities, the emergency call server 30 may transmit a request to dispatch a rescue team to the accident location of the vehicle 10 to an external device.

In order to send an emergency call, the electronic device 100, specifically the communication module, needs to be registered in a network provided by a specific service provider. At this time, when a previously registered network does not support emergency calls, the electronic device 100 needs to search for networks and frequency bands capable of transmitting emergency calls. However, when the search time is long, it may be difficult to quickly send emergency calls.

Although the electronic device 100 is located on the roof of the vehicle 10 in FIG. 1, this is only one embodiment. The electronic device 100 may be mounted at various locations (for example, an engine room, a chassis, and a dashboard) of the vehicle 10.

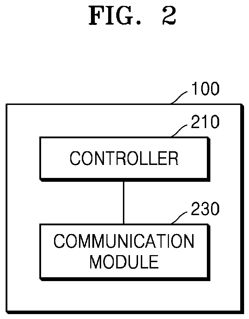

An operation of the electronic device 100 capable of quickly sending an emergency call will now be described with reference to FIGS. 2 through 12.

FIG. 2 is a block diagram of a structure of the electronic device 100 according to an embodiment.

Referring to FIG. 2, the electronic device 100 includes a controller 210 and a communication module 230.

The controller 210 and the communication module 230 may be implemented as one or more processors. The controller 210 may operate according to one or more instructions stored in a memory (not shown).

The controller 210 controls an operation of the communication module 230, performs a network registration procedure through the communication module 230, and sends an emergency call through a registered network.

The controller 210 sends an emergency call through the communication module 230 according to a result of sensing by a sensor provided in the vehicle 10 and/or the passenger's request.

The controller 210 transmits, to the communication module 230, a data signal that is to be transmitted to an external device (e.g., the base station 20 or the emergency call server 30) in order to perform a registration procedure, which will be described later, and to send an emergency call. The controller 210 receives, from the communication module 230, the data signal transmitted from the external device to the communication module 230.

The communication module 230 mediates signals between the controller 210 and the external device. In detail, the communication module 230 changes the data signal transmitted by the controller 210 into a radio frequency (RF) signal while being registered in the network, transmits the RF signal to the external device through the network. The communication module 230 changes the RF signal received from the external device through the network into a data signal, and transmits the data signal to the controller 210.

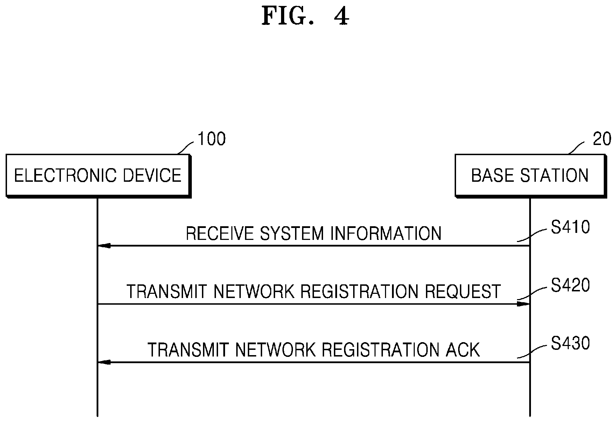

In order to transmit and receive RF signals based on the network, the communication module 230 needs to be registered in the network through at least one frequency band among several frequency bands available in the network. For example, when frequency bands available in the 2G network are an A1 frequency band, an A2 frequency band, and an A3 frequency band, the communication module 230 needs to check through which frequency band among the A1 frequency band, the A2 frequency band, and the A3 frequency band the communication module 230 is able to be registered in the 2G network. To this end, the communication module 230 may perform a registration procedure with the base station 20 by changing the data signal into the RF signal according to the frequency bands available in the network and transmitting the RF signal to the base station 20 or by changing the RF signal received from the base station 20 into the data signal and transmitting the data signal to the controller 210. The registration procedure will be described later with reference to FIG. 4.

When the communication module 230 has been registered in the network through at least one frequency band among the frequency bands available in the network, the communication module 230 may send an emergency call through the registered network.

The structure of the communication module 230 will now be described in detail.

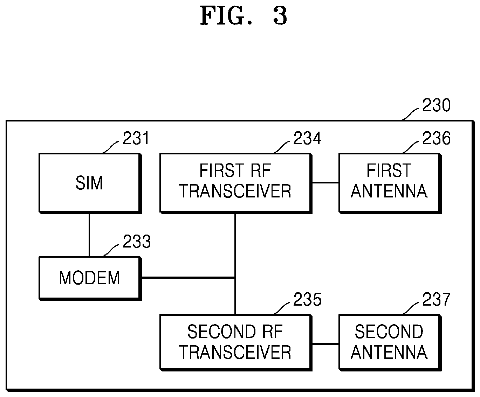

FIG. 3 is a block diagram of a structure of the communication module 230 according to an embodiment.

Referring to FIG. 3, the communication module 230 may include a SIM 231, a modem 233, a first RF transceiver 234, a second RF transceiver 235, a first antenna 236, and a second antenna 237. According to an embodiment, the first RF transceiver 234 and the second RF transceiver 235 may share one antenna.

The SIM 231 is a device that authenticates a subscriber to a network-based service provided by a service provider, and stores information related to the subscriber. The communication module 230 may be registered in a network provided by a specific service provider by storing the SIM 231 related to the specific service provider, and may transmit and receive data through the registered network.

The modem 233 changes a data signal provided by the controller 210 into a baseband signal, or changes a baseband signal provided by the first RF transceiver 234 or the second RF transceiver 235 into a data signal and provides the data signal to the controller 210.

The first RF transceiver 234 and the second RF transceiver 235 generate an RF signal having a desired frequency by changing the frequency of the baseband signal provided by the modem 233, and generates a baseband signal from an RF signal with a specific frequency received through an antenna.

The first RF transceiver 234 and the second RF transceiver 235 may process RF signals of different frequencies. For example, the first RF transceiver 234 may process an RF signals of 2100MHz, and the second RF transceiver 235 may process an RF signal of 1800MHz. An RF transceiver processing an RF signal of a preset frequency may refer to changing a baseband signal provided by the modem 233 into the RF signal of a preset frequency, and changing the RF signal of a preset frequency received from an antenna into a baseband signal.

The first antenna 236 and the second antenna 237 changes the RF signal received from each of the first RF transceiver 234 and the second RF transceiver 235 into an electromagnetic wave and send the electromagnetic wave, or changes an electromagnetic wave received from an external source into an RF signal and transmits the RF signal to each of the first RF transceiver 234 and the second RF transceiver 235.

The communication module 230 according to an embodiment of the disclosure may include two RF transceivers 234 and 235, as shown in FIG. 3. According to an embodiment, the number of RF transceivers included in the communication module 230 may be more than two.

The controller 210 may discover a frequency band capable of transmitting an emergency call among the frequency bands available in a network supporting emergency calls according to a dual search method by using the first RF transceiver 234 and the second RF transceiver 235 included in the communication module 230.

For example, when the A1 frequency band and the A2 frequency band are available in the network supporting emergency calls, the controller 210 may perform a network registration procedure using the first RF transceiver 234 with respect to the A1 frequency band, and may perform a network registration procedure using the second RF transceiver 235 with respect to the A2 frequency band. The controller 210 may check through which frequency band among the A1 frequency band and the A2 frequency band is first registered in the network, and may send an emergency call through the checked frequency band.

A network registration procedure using the first RF transceiver 234 will now be referred to as a first registration procedure, and a network registration procedure using the second RF transceiver 235 will now be referred to as a second registration procedure. Similarly, a network registration procedure using a third RF transceiver will be referred to as a third registration procedure, and a network registration procedure using a fourth RF transceiver will be referred to as a fourth registration procedure.

Before a dual search by the controller 210 is described, a network registration procedure will now be described with reference to FIG. 4.

FIG. 4 is a diagram illustrating a registration procedure between the electronic device 100 and the base station 20.

FIG. 4 shows a registration procedure using one RF transceiver. The registration procedure shown in FIG. 4 may be, for example, a network registration procedure using the first RF transceiver 234 shown in FIG. 3.

The electronic device 100 receives system information from the base station 20 (S410). The system information may include information related to a network that is available through the base station 20.

The electronic device 100 transmits a network registration request to the base station 20 according to the system information (S420).

The base station 20 allows registration of the electronic device 100 and transmits a network registration ack to the electronic device 100 (S430).

In response to the network registration ack, the electronic device 100 may send or receive a call through the network, or may transmit and receive data.

When the registration procedure between the electronic device 100 and the base station 20 is performed using an RF transceiver capable of processing an RF signal of 2100 MHz, the RF signal transmitted and received between the electronic device 100 and the base station 20 may have a frequency of 2100 MHz. When system information is not received from the base station 20 or a network registration ack is not received from the base station 20 while the registration procedure is being performed using the RF transceiver capable of processing an RF signal of 2100 MHz, the electronic device 100 may determine that network registration is not possible at the frequency of 2100 MHz. The electronic device 100 may perform a registration procedure by using an RF transceiver capable of processing an RF signal of a frequency different from 2100 MHz.

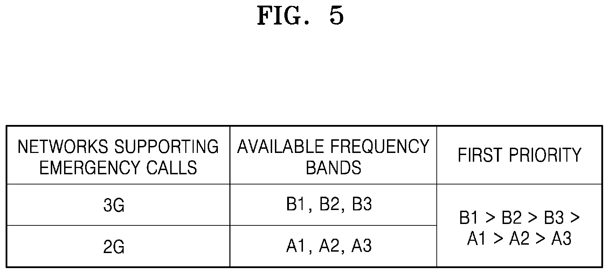

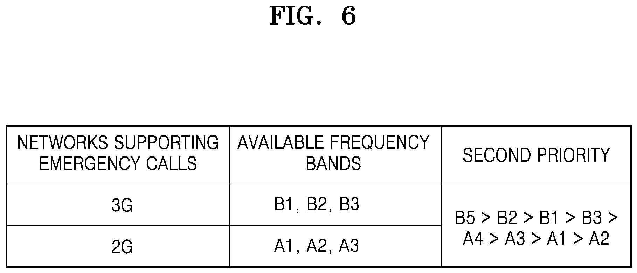

A method, performed by the controller 210, of searching for a frequency band capable of transmitting an emergency call will now be described with reference to FIGS. 5 and 6.

FIG. 5 is a table showing networks supporting emergency calls, frequency bands available in the networks, and a first priority.

The controller 210 may obtain information about a network that supports emergency calls at a current location of the vehicle 10. Information about the network that supports emergency calls at the current location of the vehicle 10 may be pre-stored in the memory, or the controller 210 may receive, from the base station 20, the information about the network that supports emergency calls.

The controller 210 identifies the frequency bands available in the network that supports emergency calls. Information about the frequency bands available in the network that supports emergency calls may be pre-stored in the memory, or the controller 210 may receive the information about the available frequency bands from the base station 20.

Referring to FIG. 5, it may be seen that the networks supporting emergency calls include a 3G network and a 2G network, a B1 frequency band, a B2 frequency band, and a B3 frequency band are available in the 3G network, and a A1 frequency band, an A2 frequency band, and an A3 frequency band are available in the 2G network.

The controller 210 may obtain a first priority for the frequency bands available in the networks supporting emergency calls. The first priority may indicate a search order between the frequency bands available in the networks supporting emergency calls, and a search order between the networks supporting emergency calls when the number of networks supporting emergency calls is two or more.

The first priority, which is used during a first search process by the electronic device 100, is distinguished from a second priority, which will be described later, used during a second search process.

The first priority may be stored in the memory, or the controller 210 may receive information indicating the first priority from the base station 20.

Referring to FIG. 5, the first priority may indicate that a search needs to be performed in the order of the B1 frequency band, the B2 frequency band, the B3 frequency band, the A1 frequency band, the A2 frequency band, and the A3 frequency band. In other words, the controller 210 may perform a network registration procedure in the order of the B1 frequency band, the B2 frequency band, the B3 frequency band, the A1 frequency band, the A2 frequency band, and the A3 frequency band according to the first priority.

The controller 210 performs the first registration procedure with respect to first frequency bands among a plurality of frequency bands available in the networks supporting emergency calls, and performs the second registration procedure with respect to second frequency bands among the plurality of frequency bands. In this case, the first frequency bands, which are the target of the first registration procedure, among the plurality of frequency bands, and the second frequency bands, which are the target of the second registration procedure, among them may be determined in various ways.

For example, the controller 210 may perform the first registration procedure with respect to the B1 frequency band, the B2 frequency band, and the B3 frequency band available in the 3G network, according to the first priority, and may perform the second registration procedure with respect to the A1 frequency band, the A2 frequency band, and the A3 frequency band available in the 2G network according to the first priority. In other words, the controller 210 may perform the first registration procedure with respect to frequency bands available in one of the networks supporting emergency calls, and may perform the second registration procedure with respect to frequency bands available in another of the networks supporting emergency calls.

As another example, the controller 210 may classify the plurality of frequency bands into the first frequency bands, which are the target of the first registration procedure, and the second frequency bands, which are the target of the second registration procedure, without considering which network the plurality of frequency bands are available in. For example, the controller 210 may perform the first registration procedure with respect to the B1 frequency band, the B3 frequency band, and the A2 frequency band, and may perform the second registration procedure with respect to the B2 frequency band, the A1 frequency band, and the A3 frequency band.

The controller 210 may sequentially proceed with the first registration procedure and the second registration procedure according to the first priority, and may send an emergency call via a frequency band first identified as being capable of transmitting an emergency call. When a network registration ack has been received from the base station 20 through a registration procedure with respect to a specific frequency band, the controller210 may identify that an emergency call could be transmitted via the specific frequency band.

According to an embodiment, the first registration procedure and the second registration procedure may be performed alternately. In other words, the controller 210 may perform the first registration procedure with respect to one frequency band, perform the second registration procedure with respect to another frequency band, and perform the first registration procedure with respect to the other frequency band.

As shown in FIG. 3, when the communication module 230 includes one modem 233, a baseband signal for the first RF transceiver 234 and a baseband signal for the second RF transceiver 235 are not generated simultaneously in one modem 233, and thus the controller 210 performs the first registration procedure when the baseband signal for the first RF transceiver 234 is generated by the modem 233, and performs the second registration procedure when the baseband signal for the second RF transceiver 235 is generated by the modem 233. Accordingly, when the communication module 230 includes two or more modems 233, the first registration procedure and the second registration procedure may be performed simultaneously.

The electronic device 100 according to an embodiment may send an emergency call more quickly because the electronic device 10 discovers a frequency band capable of transmitting an emergency call, according to a dual search method, by using two or more RF transceivers 234 and 235.

According to an embodiment, when the controller 210 does not discover a frequency band capable of transmitting an emergency call even though the first registration procedure and the second registration procedure have been performed with respect to all frequency bands, the controller 210 may perform the second registration procedure with respect to the first frequency bands, which were the target of the first registration procedure, according to the first priority, and may perform the first registration procedure with respect to the second frequency bands, which were the target of the second registration procedure, according to the first priority.

Because the first antenna 236 and/or the second antenna 237 may be damaged when a vehicle 10 accident occurs, the controller 210 performs the registration procedure again by changing the first frequency bands, which were the target of the first registration procedure, and the second frequency bands, which were the target of the second registration procedure, to each other. For example, when the first antenna 236 is damaged due to an accident with the vehicle 10, it is difficult to find a frequency band capable of transmitting an emergency call through the first registration procedure using the first RF transceiver 234 connected to the first antenna 236. Thus, the second registration procedure may be performed on the first frequency bands to evaluate once again a frequency band incorrectly determined to be unable to send an emergency call.

According to an embodiment, when a frequency band capable of transmitting an emergency call is not discovered through the first registration procedure and the second registration procedure based on the first priority, the controller 210 may newly determine the second priority for the plurality of frequency bands available in the network.

The second priority may be determined based on the signal quality of each frequency band confirmed while the registration procedure according to the first priority is being performed. The signal quality may be calculated from signal-related characteristics such as signal strength.

In detail, the controller 210 may calculate the signal quality of each frequency band by evaluating a signal received from the base station 20 in each frequency band, which is the target of the registration procedure, while performing a registration procedure based on the first priority.

According to an embodiment, the controller 210 may determine a second priority between the plurality of frequency bands in descending order from highest signal quality.

According to an embodiment, the controller 210 may determine the second priority by considering not only the frequency bands available in the network supporting emergency calls, but also the frequency bands supported by the electronic device 100. For example, when the A1 frequency band and the A2 frequency band may be available in the network supporting emergency calls, and the electronic device 100 may support the A1 frequency band, the A2 frequency band, and the A3 frequency band, the controller 210 may determine the second priority not only for the A1 and A2 frequency bands available in the network supporting emergency calls, but also for the A3 frequency band supported by the electronic device 100.

A method of dual-searching for a frequency band capable of transmitting an emergency call, based on the second priority, will now be described with reference to FIG. 6.

FIG. 6 is a table showing networks supporting emergency calls, frequency bands available in the networks, and a second priority.

Referring to FIG. 6, it may be seen that the networks supporting emergency calls include a 3G network and a 2G network, the B1 frequency band, the B2 frequency band, and the B3 frequency band are available in the 3G network, and the A1 frequency band, the A2 frequency band, and the A3 frequency band are available in the 2G network.

The electronic device 100 performed the first registration procedure and the second registration procedure according to the first priority for the B1 frequency band, the B2 frequency band, the B3 frequency band, the A1 frequency band, the A2 frequency band, and the A3 frequency band. However, when a frequency band capable of transmitting an emergency call was not found, the electronic device 100 may determine a second priority between the B1 frequency band, the B2 frequency band, the B3 frequency band, the A1 frequency band, the A2 frequency band, and the A3 frequency band.

As described above, the second priority may be determined based on a signal quality confirmed in each frequency band while the registration procedure based on the first priority is being performed with respect to the B1 frequency band, the B2 frequency band, the B3 frequency band, the A1 frequency band, the A2 frequency band, and the A3 frequency band.

As shown in FIG. 6, the second priority may indicate that a search needs to be performed in the order of the B2 frequency band, the B1 frequency band, the B3 frequency band, the A3 frequency band, the A1 frequency band, and the A2 frequency band.

Referring to FIG. 6, it may be seen that ranking is set also for a B5 frequency band and an A4 frequency band that are not available in the 3G network and the 2G network, and the B5 frequency band may be a frequency band in the 3G network supported by the electronic device 100 and the A4 frequency band may be a frequency band in the 2G network supported by the electronic device 100.

In other words, the controller 210 may determine the second priority not only for the frequency bands available in a network supporting emergency calls but also for the frequency bands supported by the electronic device 100. Because no frequency bands capable of transmitting emergency calls were found even though the registration procedure based on the first priority was performed, the frequency bands supported by the electronic device 100 are also made new targets of the registration procedure.

As a frequency band supported by the electronic device 100, a frequency band that was not evaluated in the registration procedure based on the first priority may have a high priority. That is, as shown in FIG. 6, the ranking of the B5 frequency band in the 3G network supported by the electronic device 100 may be higher than the ranking of the B1 frequency band, the B2 frequency band, and the B3 frequency band supported by the 3G network, and the ranking of the A4 frequency band in the 2G network supported by the electronic device 100 may be higher than the ranking of the A1 frequency band, the A2 frequency band, and the A3 frequency band supported by the 2G network.

The controller 210 performs the first registration procedure with respect to third frequency bands among a plurality of frequency bands that are to be evaluated, and performs the second registration procedure with respect to fourth frequency bands among the plurality of frequency bands that are to be evaluated. In this case, the third frequency bands, which are the target of the first registration procedure, and the fourth frequency bands, which are the target of the second registration procedure, may be determined in various ways.

For example, the controller 210 may perform the first registration procedure with respect to the B1 frequency band, the B2 frequency band, the B3 frequency band, and the B5 frequency band available in the 3G network, according to the second priority, and may perform the second registration procedure with respect to the A1 frequency band, the A2 frequency band, the A3 frequency band, and the A4 frequency band available in the 2G network according to the first priority.

When the first registration procedure according to the first priority was performed with respect to the frequency bands available in the 3G network and the second registration procedure was performed with respect to the frequency bands available in the 2G network, the controller 210 may perform the second registration procedure according to the second priority with respect to the B1 frequency band, the B2 frequency band, the B3 frequency band, and the B5 frequency band available in the 3G network, and may perform the first registration procedure according to the first priority with respect to the A1 frequency band, the A2 frequency band, the A3 frequency band, and the A4 frequency band available in the 2G network.

As another example, the controller 210 may classify the plurality of frequency bands into the first frequency bands, which are the target of the first registration procedure, and the second frequency bands, which are the target of the second registration procedure, without considering which network the plurality of frequency bands are available in. For example, the controller 210 may perform the first registration procedure with respect to the B5 frequency band, the B1 frequency band, the A4 frequency band, and the A1 frequency band, and may perform the second registration procedure with respect to the B2 frequency band, the B3 frequency band, the A3 frequency band, and the A2 frequency band.

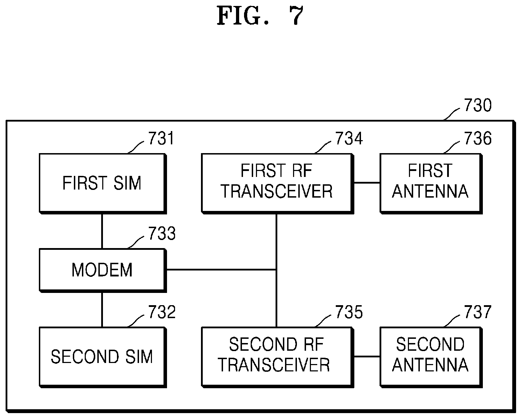

FIG. 7 is a block diagram of a structure of a communication module 730 according to another embodiment.

Referring to FIG. 7, the communication module 730 may include a first SIM 731, a second SIM 732, a modem 733, a first RF transceiver 734, a second RF transceiver 735, a first antenna 736, and a second antenna 737.

When the communication module 730 shown in FIG. 7 is compared with the communication module 230 shown in FIG. 3, it may be seen that the communication module 730 shown in FIG. 7 includes the two first and second SIMs 731 and 732.

Because the modem 733, the first RF transceiver 734, the second RF transceiver 735, the first antenna 736, and the second antenna 737 have been described above with reference to FIG. 3, detailed descriptions thereof will be omitted.

Because the communication module 730 includes the first SIM 731 and the second SIM 732, the communication module 730 may use a network provided by a service provider related to the first SIM 731 and a network provided by a service provider related to the second SIM 732.

The communication module 730 may register in any one of networks provided by different service providers, and may send and receive calls through the registered network.

According to an embodiment, the number of SIMs included in the communication interface 730 may be two or more.

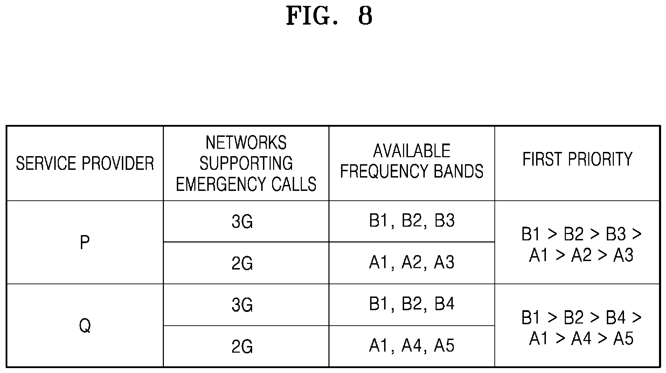

When the communication module 730 is associated with a plurality of service providers, a method of searching for a frequency band capable of transmitting an emergency call will now be described with reference to FIG. 8.

FIG. 8 is a table showing service providers associated with the communication module 730, networks supporting emergency calls, frequency bands available in the networks, and a first priority.

Referring to FIG. 8, because the communication module 730 includes the first SIM 731 and the second SIM 732, the electronic device 100 may use a network service provided by a P service provider and a network service provided by a Q service provider.

Both the P service provider and the Q service provider support emergency calls in the 3G and 2G networks. The type of network that supports emergency calls may vary according to service providers.

The B1 frequency band, the B2 frequency band, and the B3 frequency band are available in the P service provider's 3G network, and the A1 frequency band, the A2 frequency band, and the A3 frequency band are available in the P service provider's 2G network. The B1 frequency band, the B2 frequency band, and the B4 frequency band are available in the Q service provider's 3G network, and the A1 frequency band, the A4 frequency band, and the A5 frequency band are available in the Q service provider's 2G network.

A first priority may be set for a plurality of frequency bands available in networks provided by the P service provider and a plurality of frequency bands available in networks provided by the Q service provider. As described above, the first priority may be stored in the memory, or the controller 210 may receive information indicating the first priority from the base station 20 operated by the P service provider and/or the base station 20 operated by the Q service provider.

Referring to FIG. 8, the first priority indicates that a search needs to be performed in the order of the B1 frequency band, the B2 frequency band, the B3 frequency band, the A1 frequency band, the A2 frequency band, and the A3 frequency band corresponding to the P service provider, and indicates that a search needs to be performed in the order of the B1 frequency band, the B2 frequency band, the B4 frequency band, the A1 frequency band, the A4 frequency band, and the A5 frequency band corresponding to the Q service provider. Although not shown in FIG. 8, the first priority may also indicate which service provider among the P service provider and the Q service provider has a highest priority.

The controller 210 performs the first registration procedure with respect to first frequency bands among to-be-evaluated frequency bands including a plurality of frequency bands available in the networks provided by the P service provider and a plurality of frequency bands available in the networks provided by the Q service provider, and performs the second registration procedure with respect to second frequency bands among the to-be-evaluated frequency bands.

The controller 210 may determine the first frequency bands, which are the target of the first registration procedure, and the second frequency bands, which are the target of the second registration procedure, in various ways.

For example, the controller 210 may perform the first registration procedure with respect to the frequency bands available in the network provided by the P service provider, according to the first priority, and may perform the second registration procedure with respect to the frequency bands available in the network provided by the Q service provider, according to the first priority.

As another example, the controller 210 may perform the first registration procedure with respect to the frequency bands available in the 3G network provided by the P service provider and the Q service provider, according to the first priority, and may perform the second registration procedure with respect to the frequency bands available in the 2G network provided by the P service provider and the Q service provider, according to the first priority.

For example, the controller 210 may perform the first registration procedure with respect to the frequency bands available in the 3G network provided by the P service provider (the B1 frequency band, the B2 frequency band, and the B3 frequency band), and with respect to the frequency bands available in the 3G network provided by the Q service provider (the B1 frequency band, the B2 frequency band, and the B4 frequency band), according to the first priority. When the P service provider ranks higher than the Q service provider, the controller 210 may first perform the first registration procedure with respect to the frequency bands available in the 3G network provided by the P service provider, and then may perform the first registration procedure with respect to the frequency bands available in the 3G network provided by the Q service provider.

As another example, the controller 210 may perform the first registration procedure with respect to the frequency bands available in the 3G network provided by the P service provider, and may perform the first registration procedure with respect to the frequency bands available in the 2G network provided by the P service provider. The controller 210 may perform the second registration procedure with respect to the frequency bands available in the 2G network provided by the Q service provider, and may perform the second registration procedure with respect to the frequency bands available in the 3G network provided by the Q service provider.

In other words, the controller 210 may perform the second registration procedure in the order of the 3 G network to the 2G network, which are both provided by the P service provider, and may perform the second registration procedure in the order of the 2G network to the 3G network, which are both provided by the Q service provider. Performing the second registration procedure in the order of 2G network →3G network even when the B1 frequency band, the B2 frequency band, and the B4 frequency band available in the 3G network provided by the Q service provider ranks higher than the A1 frequency band, the A4 frequency band, and the A5 frequency band available in the 2G network in FIG. 8 may be understood as the controller 210 partially modifying the first priority.

The reason for partially modifying the first priority as described above is to enable the second registration procedure to be performed with respect to the 2G network provided by the Q service provider while the first registration procedure is being performed with respect to the 3G network provided by the P service provider. Accordingly, evaluation of the frequency bands available in the 3G network and evaluation of the frequency bands available in the 2G network may be carried out in parallel.

The controller 210 may sequentially proceed with the first registration procedure and the second registration procedure according to the first priority, and at the same time may send an emergency call via a frequency band first identified as being capable of transmitting an emergency call.

When a network registration ack has been received from the base station 20 through a registration procedure with respect to a specific frequency band, the controller210 may identify that an emergency call may be transmitted via the specific frequency band.

According to an embodiment, when the controller 210 does not discover a frequency band capable of transmitting an emergency call even though the first registration procedure and the second registration procedure have been performed with respect to all frequency bands, the controller 210 may perform the second registration procedure with respect to the first frequency bands, which were the target of the first registration procedure, according to the first priority, and may perform the first registration procedure with respect to the second frequency bands, which were the target of the second registration procedure, according to the first priority. At this time, the controller 210 may also perform the first registration procedure and/or the second registration procedure by using the frequency bands supported by the electronic device 100 as evaluation targets.

According to an embodiment, when a frequency band capable of transmitting an emergency call is not discovered through the first registration procedure and the second registration procedure based on the first priority, the controller 210 may newly determine the second priority for the plurality of frequency bands.

As described above, the second priority may be determined based on the signal quality of each frequency band confirmed while the registration procedure according to the first priority is being performed.

The controller 210 may determine the second priority by including not only the frequency bands available in the networks supporting emergency calls, but also the frequency bands supported by the electronic device 100.

When a frequency band capable of transmitting emergency calls is not found even when the registration procedure has been performed with respect to the frequency bands available in the networks provided by the P service provider and those available in the networks provided by the Q service provider in FIG. 8, the controller 210 may determine the second priority for the frequency bands available in the networks provided by the P service provider and the Q service provider.

The controller 210 performs the first registration procedure with respect to third frequency bands among a plurality of frequency bands that are to be evaluated, according to the second priority, and performs the second registration procedure with respect to fourth frequency bands among the plurality of frequency bands that are to be evaluated, according to the second priority. In this case, the third frequency bands, which are the target of the first registration procedure, and the fourth frequency bands, which are the target of the second registration procedure, may be determined in various ways.

According to an embodiment, the first frequency bands, which were the target of the first registration procedure, may be determined as the fourth frequency bands, which are the target of the second registration procedure, and the second frequency bands, which were the target of the second registration procedure, may be determined as the third frequency bands, which are the target of the first registration procedure.

For example, when the second registration procedure has been performed with respect to the frequency bands available in the network provided by the Q service provider, according to the first priority, the controller 210 may perform the first registration procedure with respect to the frequency bands according to the second priority, and, when the first registration procedure has been performed with respect to the frequency bands available in the network provided by the P service provider, according to the first priority, the controller 210 may perform the second registration procedure with respect to the frequency bands according to the first priority.

As another example, when the second registration procedure has been performed with respect to the frequency bands available in the 2G network provided by the P service provider and the Q service provider, according to the first priority, the controller 210 may perform the first registration procedure with respect to the frequency bands according to the second priority, and, when the first registration procedure has been performed with respect to the frequency bands available in the 3G network provided by the P service provider and the Q service provider, according to the first priority, the controller 210 may perform the second registration procedure with respect to the frequency bands according to the second priority.

According to an embodiment, the first frequency bands, which were the target of the first registration procedure, may be determined as the third frequency bands, which are the target of the first registration procedure, and the second frequency bands, which were the target of the second registration procedure, may be determined as the fourth frequency bands, which are the target of the second registration procedure.

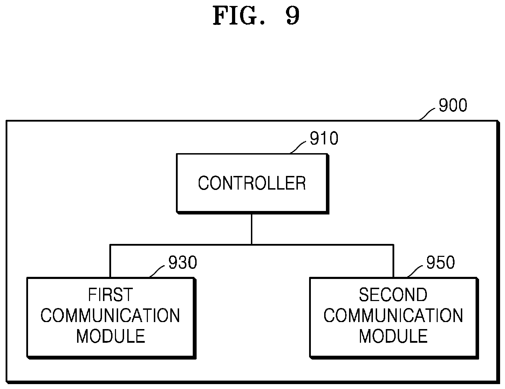

FIG. 9 is a block diagram of a structure of an electronic device 900 according to another embodiment.

Referring to FIG. 9, the electronic device 900 according to another embodiment may include a controller 910, a first communication module 930, and a second communication module 950.

The first communication module 930 and the second communication module 950 may have the same configurations as the communication module 230 shown in FIG. 3.

That is, the electronic device 900 shown in FIG. 9 may include a total of two SIMs and a total of four RF transceivers by including two communication modules 230 each including one SIM 231 and two RF transceivers 234 and 235. The two RF transceivers included in the first communication module 930 are respectively referred to as a first RF transceiver and a second RF transceiver, and the two RF transceivers included in the second communication module 950 are referred to as a third RF transceiver and a fourth RF transceiver, respectively.

According to am embodiment, the electronic device 900 may include more than two SIMs and more than four RF transceivers.

Because the electronic device 900 includes two SIMs, the electronic device 900 may use networks provided by different service providers.

The controller 910 may perform the first registration procedure and the second registration procedure with respect to a plurality of frequency bands available in a network provided byone service provider, according to the first priority, and may perform the third registration procedure and the fourth registration procedure with respect to a plurality of frequency bands available in a network provided by another service provider, according to the first priority.

The first and second registration procedures based on the first priority, and the third and fourth registration procedures based on the first priority may be i performed like the first and second registration procedures based on the first priority described above with respect to FIG. 5.

In other words, the registration procedure based on the communication module 230 shown in FIG. 3 may be independently performed by the first communication module 930 and the second communication module 950. Because the first RF transceiver 234 and the second RF transceiver 235 of the communication module 230 shown in FIG. 3 are connected to one modem 233, the first registration by the first RF transceiver 234 and the second registration procedure by the second RF transceiver 235 may be performed alternately, as described above. However, in the electronic device 900 shown in FIG. 9, a modem connected to the first RF transceiver and the second RF transceiver and a modem connected to the third RF transceiver and the fourth RF transceiver are distinct from each other, and thus the first registration procedure and the third registration procedure may be performed simultaneously, and the second registration procedure and the fourth registration procedure may also be performed simultaneously.

According to an embodiment, the controller 910 may perform the first registration procedure with respect to first frequency bands among a plurality of frequency bands available in a network provided by one service provider, according to the first priority, and may perform the second registration procedure with respect to second frequency bands among the plurality of frequency bands, according to the first priority. The controller 910 may perform the third registration procedure with respect to third frequency bands among a plurality of frequency bands available in a network provided by another service provider, according to the first priority, and may perform the fourth registration procedure with respect to fourth frequency bands among the plurality of frequency bands, according to the first priority. The first frequency bands, which are the target of the first registration procedure, and the second frequency bands, which are the target of the second registration procedure, among the plurality of frequency bands available in the network provided by the one service provider, may be determined in various ways. Likewise, the third frequency bands, which are the target of the third registration procedure, and the fourth frequency bands, which are the target of the fourth registration procedure, among the plurality of frequency bands available in the network provided by the other service provider, may be determined in various ways.

According to an embodiment, when the controller 910 does not discover a frequency band capable of transmitting an emergency call even though the first through fourth registration procedures have been performed with respect to all frequency bands, the controller 210 may perform the second registration procedure with respect to the first frequency bands, which were the target of the first registration procedure, according to the first priority, and may perform the first registration procedure with respect to the second frequency bands, which were the target of the second registration procedure, according to the first priority. The controller 910 may perform the fourth registration procedure with respect to the third frequency bands, which were the target of the third registration procedure, according to the first priority, and may perform the third registration procedure with respect to the fourth frequency bands, which were the target of the fourth registration procedure, according to the first priority.

According to an embodiment, the controller 910 may also perform the first registration procedure, the second registration procedure, the third registration procedure, or the fourth registration procedure with respect to a frequency band supported by the electronic device 900.

According to an embodiment, when a frequency band capable of transmitting an emergency call is not discovered through the first through fourth registration procedures based on the first priority, the controller 910 may newly determine the second priority for frequency bands.

As described above, the second priority may be determined based on the signal quality of each frequency band confirmed while the registration procedure according to the first priority is being performed.

The controller 910 may determine the second priority by including not only the frequency bands available in the networks supporting emergency calls, but also the frequency bands supported by the electronic device 900.

The controller 910 may perform the first through fourth registration procedures with respect to the frequency bands available in networks provided by service providers, according to the second priority.

According to an embodiment, the controller 910 may perform the first registration procedure with respect to fifth frequency bands among a plurality of frequency bands available in a network provided by one service provider, according to the second priority, and may perform the second registration procedure with respect to sixth frequency bands among the plurality of frequency bands, according to the second priority. The controller 910 may perform the third registration procedure with respect to seventh frequency bands among a plurality of frequency bands available in a network provided by another service provider, according to the second priority, and may perform the fourth registration procedure with respect to eighth frequency bands among the plurality of frequency bands, according to the second priority. The fifth frequency bands, which are the target of the first registration procedure, and the sixth frequency bands, which are the target of the second registration procedure, among the plurality of frequency bands available in the network provided by the one service provider, may be determined in various ways. Likewise, the seventh frequency bands, which are the target of the third registration procedure, and the eighth frequency bands, which are the target of the fourth registration procedure, among the plurality of frequency bands available in the network provided by the other service provider, may be determined in various ways.

According to an embodiment, the first frequency bands, which were the target of the first registration procedure, may be determined as the sixth frequency bands, which are the target of the second registration procedure, and the second frequency bands, which were the target of the second registration procedure, may be determined as the fifth frequency bands, which are the target of the first registration procedure. The third frequency bands, which were the target of the third registration procedure, may be determined as the eighth frequency bands, which are the target of the fourth registration procedure, and the fourth frequency bands, which were the target of the fourth registration procedure, may be determined as the seventh frequency bands, which are the target of the third registration procedure.

According to an embodiment, the first frequency bands, which were the target of the first registration procedure, may be determined as the fifth frequency bands, which are the target of the first registration procedure, and the second frequency bands, which were the target of the second registration procedure, may be determined as the sixth frequency bands, which are the target of the second registration procedure. The third frequency bands, which were the target of the third registration procedure, may be determined as the seventh frequency bands, which are the target of the third registration procedure, and the fourth frequency bands, which were the target of the fourth registration procedure, may be determined as the eighth frequency bands, which are the target of the fourth registration procedure.

According to an embodiment, the first communication module 930 and the second communication module 950 shown in FIG. 9 may each include one RF transceiver. In this case, the controller 910 may perform a registration procedure using the RF transceiver of the first communication module 930 with respect to frequency bands available in a network provided by one service provider, and may perform a registration procedure using the RF transceiver of the second communication module 950 with respect to frequency bands available in a network provided by another service provider. According to an embodiment, the controller 910 may perform the registration procedure using the RF transceiver of the first communication module 930 in the order of the 3G network to the 2G network, which are both provided by the one service provider, and may perform the registration procedure using the RF transceiver of the second communication module 950 in the order of the 2G network to the 3G network, which are both provided by the other service provider.

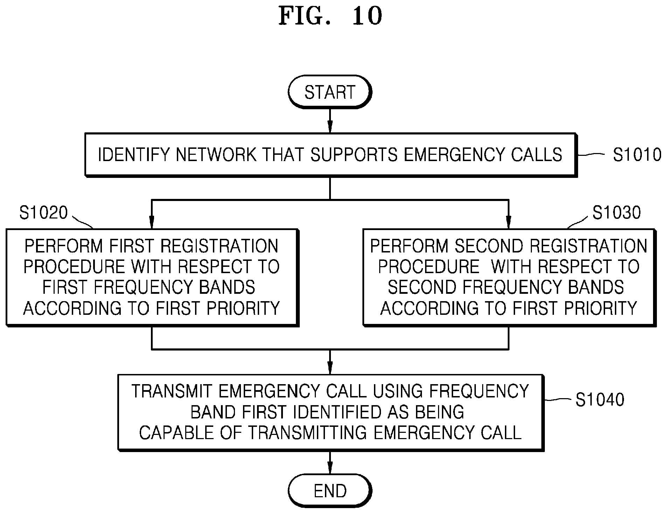

FIG. 10 is a flowchart of a method of sending an emergency call, according to an embodiment.

In operation S1010, the electronic device 100 identifies a network that supports emergency calls. The electronic device 100 may identify the network that supports emergency calls at a current location of the vehicle 10.

In operation S1020, the electronic device 100 performs the first registration procedure with respect to first frequency bands among a plurality of frequency bands available in the network supporting emergency calls, according to the first priority.

In operation S1030, the electronic device 100 performs the second registration procedure with respect to second frequency bands among the plurality of frequency bands available in the network supporting emergency calls, according to the first priority.

According to an embodiment, when the electronic device 100 needs to send an emergency call, the electronic device 100 may classify the plurality of frequency bands available in the network into the first frequency bands, which are the target of the first registration procedure, and the second frequency bands, which are the subject of the second registration procedure, in consideration of at least one of the number of communication modules 230 included in the electronic device 100, the number of SIMs included in the communication module 230, and the number of RF transceivers included in the communication module 230.

According to an embodiment, when the communication module 230 of the electronic device 100 includes one SIM and two RF transceivers, the electronic device 100 may classify frequency bands available in a network provided by a certain service provider into the first frequency bands, which are the target of the first registration procedure, and the second frequency bands, which are the subject of the second registration procedure.

According to another embodiment, when the communication module 230 of the electronic device 100 includes two SIMs and two RF transceivers, the electronic device 100 may classify to-be-evaluated frequency bands including frequency bands available in a network provided by a first service provider and frequency bands available in a network provided by a second service provider into the first frequency bands, which are the target of the first registration procedure, and the second frequency bands, which are the subject of the second registration procedure.

According to another embodiment, as described above with reference to FIG. 9, when the electronic device 100 includes two communication modules including one SIM and two RF transceivers, the electronic device 100 may classify a plurality of frequency bands available in a network provided by a first service provider into the first frequency bands, which are the target of the first registration procedure, and the second frequency bands, which are the subject of the second registration procedure, and may classify a plurality of frequency bands available in a network provided by a second service provider into the third frequency bands, which are the target of the third registration procedure, and the fourth frequency bands, which are the subject of the fourth registration procedure.

In operation S1040, the electronic device 100 sends an emergency call via a frequency band first identified as being capable of transmitting an emergency call while the first and second registration procedures based on the first priority are being performed.

When an emergency call is connected to the emergency call server 30, the controller 210 may transmit voice data of the passenger of the vehicle 10 or environmental data of the vehicle 10 to the emergency call server 30.

When a frequency band capable of transmitting emergency calls is not identified even when the first and second registration procedures based on the first priority have been performed with respect to the plurality of frequency bands available in the network supporting emergency calls, the electronic device 100 may transmit a request to send an emergency call to a mobile device (e.g., a smartphone, a tablet PC, or a wearable device) of the passenger of the vehicle 10. This is to prepare for a case where all of the antennas of the electronic device 100 are damaged due to an accident of the vehicle 10, and the electronic device 100 may store identification information of the mobile device in order to transmit the request to send an emergency call.

The mobile device may search for the frequency band capable of transmitting emergency calls at the request of the electronic device 100, and may send an emergency call through a found frequency band. The mobile device may transmit, to the emergency call server 30, the passenger's voice data and/or environmental data provided by the electronic device 100 or directly obtained.

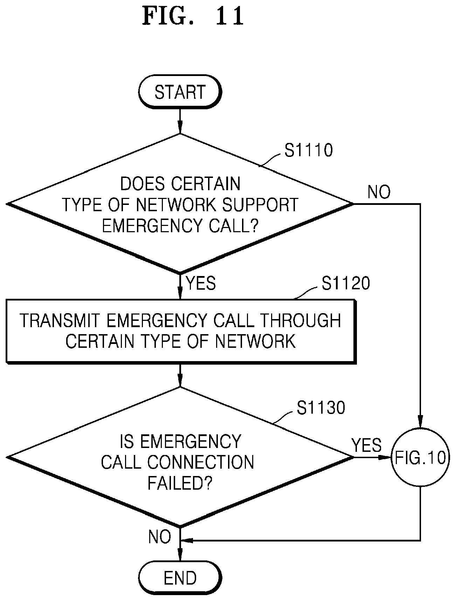

FIG. 11 is a flowchart of a method of sending an emergency call, according to another embodiment.

In operation S1110, when the electronic device 100 needs to send an emergency call while being registered in a certain type of network, the electronic device 100 may determine whether the certain type of network supports an emergency call. The certain type of network may include, for example, a packet switching network (e.g., a 5G network or a 4G network).

In operation S1120, when the certain type of network supports an emergency calls, the electronic device 100 sends the emergency call through the certain type of network.

In operation S1 130, the electronic device 100 determines whether the emergency call has been connected to the emergency call server 30.

When it is determined in operation S1110 that the certain type of network does not support the emergency call or the emergency call is not connected to the emergency call server 30 in operation S1130, the electronic device 100 performs the process shown in FIG. 10.

Because the emergency call is not supported in the certain type of network, the network identified in operation S 1010 of FIG. 10 may be a network of a different type from the certain type. For example, the network identified in operation S 1010 of FIG. 10 may include a circuit switching network (e.g., a 2G network or a 3G network).

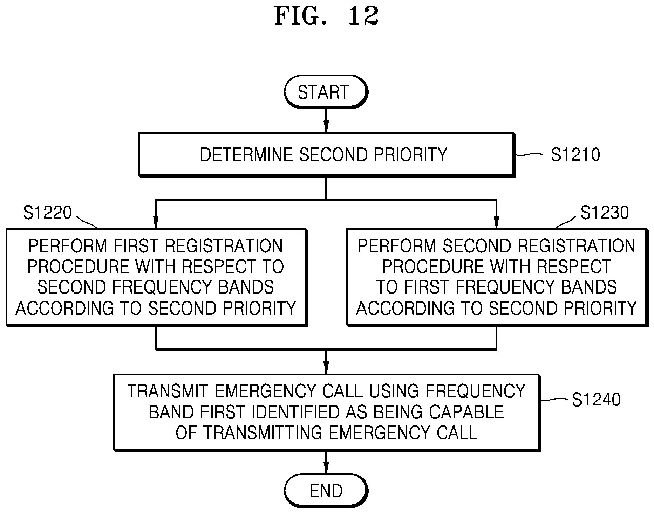

FIG. 12 is a flowchart of a method of sending an emergency call when a frequency band capable of transmitting the emergency call has not been found according to the method shown in FIG. 10.

In operation S1210, the electronic device 100 determines a second priority between a plurality of frequency bands that are to be evaluated. The second priority may be determined based on the signal quality of each frequency band confirmed during a registration procedure based on the first priority.

In operation S1220, the electronic device 100 performs a first registration procedure with respect to second frequency bands among the plurality of frequency bands according to the second priority. In operation S1230, the electronic device 100 performs a second registration procedure with respect to first frequency bands among the plurality of frequency bands according to the second priority.

In operation S 1240, the electronic device 100 sends an emergency call via a frequency band first identified as being capable of transmitting an emergency call while the first and second registration procedures based on the second priority are being performed.

When a frequency band capable of transmitting emergency calls is not identified even when the first and second registration procedures based on the second priority have been performed, the electronic device 100 may transmit a request to send an emergency call to a mobile device (e.g., a smartphone, a tablet PC, or a wearable device) of the passenger of the vehicle 10.

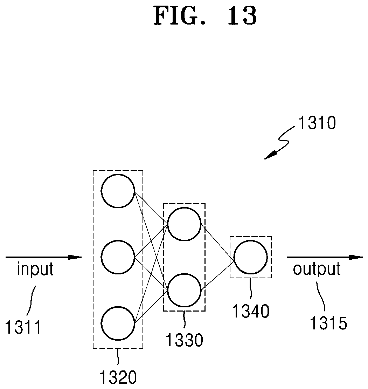

In an embodiment of the disclosure, at least one of operations performed by the controller 210 may be performed using an artificial intelligence (AI) technology. At least one operation performed using AI technology will now be described in detail with reference to FIG. 13.

FIG. 13 is a diagram illustrating an operation performed using AI technology, according to an embodiment.

In detail, by using the AI technology for performing computations through a neural network, the electronic device 100 may perform at least one of operation i) of determining whether there is a need to send an emergency call, operation ii) of determining a first priority, operation iii) of determining a second priority, and operation iv) of determining a frequency band capable of transmitting an emergency call. For example, the at least one operation may be performed using the AI technology, based on a communication state between a server (not shown) and the vehicle 10.

At least one of operation i) of determining whether there is a need to send an emergency call, operation ii) of determining a first priority, operation iii) of determining a second priority, and operation iv) of determining a frequency band capable of transmitting an emergency call will now be referred to as an emergency call sending operation.

The AI technology is for obtaining an intended result by performing processing, such as analysis and/or classification, on input data based on computations through a neural network.

The AI technology may be implemented using an algorithm. Here, the algorithm for implementing the AI technology, or a set of the algorithms is referred to as a neural network. The neural network may receive input data, perform computations for the aforementioned analysis and classification, and output result data. In order for the neural network to accurately output the result data corresponding to the input data, the neural network needs to be trained. The 'training' may refer to training a neural network so that the neural network discovers or learns by itself a method of analyzing pieces of input data for the neural network, a method of classifying the pieces of input data, and/or a method of extracting a feature necessary for generating result data from the pieces of input data. In detail, through a training process, the neural network may be trained based on training data to optimize weight values in the neural network. An intended result is output by processing the pieces of input data through the neural network having the optimized weight values.

When the number of hidden layers, which are internal layers performing computations, is plural, i.e., when the depth of the neural network performing computations increases, the neural network may be classified as a deep neural network (DNN). Examples of the neural network may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), and Deep Q-Networks. However, embodiments of the disclosure are not limited to the above-described examples. Also, the neural networks may be subdivided. For example, the CNN may be classified into a Deep Convolution Neural Network (DCNN) or a Capsnet neural network (not shown).

An 'Al model' may refer to a neural network including at least one layer operating to receive input data and output an intended result. The 'Al model' may also refer to an algorithm or a set of a plurality of algorithms for outputting an intended result by performing computations through a neural network, a processor for executing the algorithm (or the set of algorithms), software for executing the algorithm (or the set of algorithms), or hardware for executing the algorithm (or the set of algorithms).

Referring to FIG. 13, a neural network 1310 may be trained by receiving training data. The trained neural network 1310 receives, through an input layer 1320, input data 1311 (e.g., vehicle-related information, information about surroundings of the vehicle, or information related to networks available at a current position of the vehicle (e.g., the type of network, an available bandwidth, and the quality of signals transmitted and received in the bandwidth)), and the input layer 1320, a hidden layer 1330, and an output layer 1340 may perform computations for outputting output data 1315 by analyzing the input data 1311 and data transferred from a previous layer. Although FIG. 13 illustrates one hidden layer 1330, this is only an example, and a plurality of hidden layers 1330 may be provided.

For example, the neural network 1310 may learn a method of determining whether there is a need to sens an emergency call, based on information related to the vehicle 10 and/or information about surroundings of the vehicle 10. The trained neural network 1310 may receive the information related to the vehicle 10 and/or the information about surroundings of the vehicle 10, and may determine whether there is a need to send an emergency call.

As another example, the neural network 1310 may learn at least one of a method of determining a first priority, a method of determining a second priority, and a method of determining a frequency band capable of transmitting an emergency call based on information related to an available network. The trained neural network 1310 may determine at least one of a first priority, a second priority, and a frequency band capable of transmitting an emergency call, based on information related to a network available at the current location of the vehicle 10.

In an embodiment of the disclosure, a neural network that performs an emergency call sending operation may be implemented in a controller (e.g., the controller 210 of FIG. 2).

Alternatively, the neural network that performs the above-described emergency call sending operation may be implemented in an electronic device (not shown) separate from the electronic device 200 or a processor (not shown).

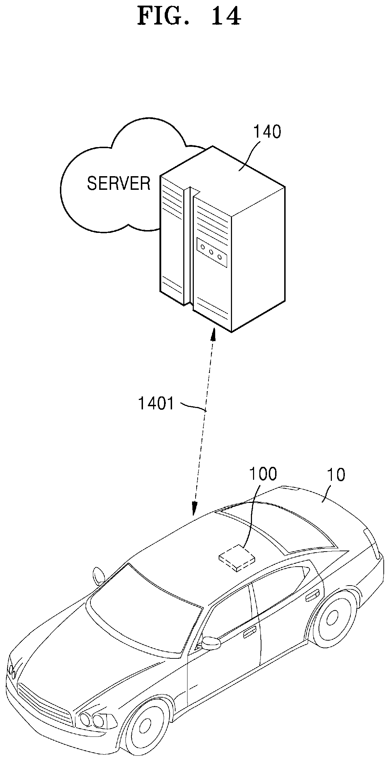

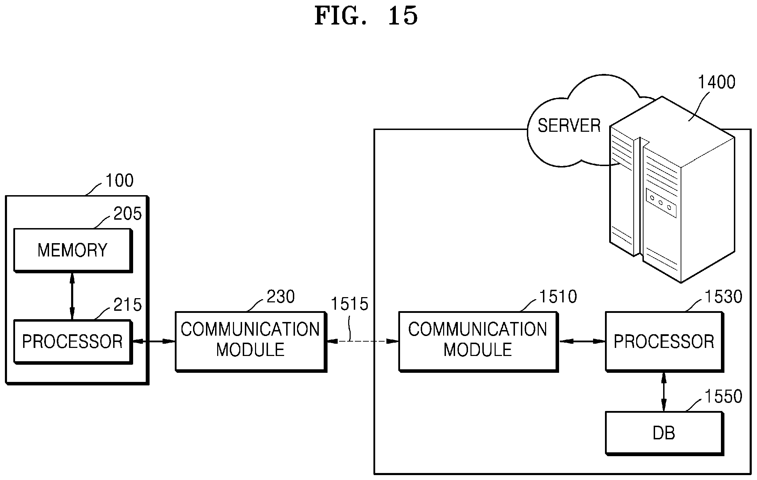

Computations through the neural network described above may be performed by a server (not shown) capable of communicating with the electronic device 100 according to an embodiment through a wireless communication network. Communication between the electronic device 100 and the server (not shown) will now be described in detail with reference to FIGS. 14 and 15.

FIG. 14 is a diagram illustrating the electronic device 100 mounted on the vehicle 10, and a server 1400, according to an embodiment.

In an embodiment of the disclosure, at least one of i) whether there is a need to send an emergency call, ii) a first priority, iii) a second priority, and iv) a frequency band capable of transmitting an emergency call may be calculated by the server 1400 and then may be transmitted to the electronic device 100 located on the vehicle 10. The server 1400 may transmit and receive data to and from the electronic device 100 via a communication network and may process the data.

In an embodiment of the disclosure, a separate electronic device mounted on a vehicle may receive, from the server 1700, information about at least one of i) whether there is a need to send an emergency call, ii) a first priority, iii) a second priority, and iv) a frequency band capable of transmitting an emergency call, and may transmit the received information to the electronic device 100. In this case, the electronic device 100 may send an emergency call according to the received information.

The server 1400 may include a server, a server system, a server-based apparatus, or the like, which transmits/receives data to/from the electronic device 100 via a communication network and processes the data.

Referring to FIG. 15, the server 1400 includes a communication module 1510 configured to communicate with the electronic device 100, and a processor 1530 configured to perform at least one instruction.

For example, the processor 1530 of the server 1400 may receive the information related to the vehicle 10 and/or the information about surroundings of the vehicle 10, and may determine whether there is a need to send an emergency call. The communication module 1510 may transmit, to the electronic device 100, information indicating whether there is a need to send an emergency call.

As another example, the processor 1530 of the server 1400 may determine at least one of a first priority, a second priority, and a frequency band capable of transmitting an emergency call, based on the information related to the network available at the current location of the vehicle 10. The communication module 1510 may transmit, to the electronic device 100, information indicating at least one of the first priority, the second priority, and the frequency band capable of transmitting an emergency call.

In an embodiment of the disclosure, the server 1400 may perform the emergency call sending operation by performing computations through the neural network 1310 described above with reference to FIG. 13. In detail, the server 1400 may train an AI model and store the trained AI model. The server 1400 may perform the above-described emergency call sending operation by using the trained AI model.

In general, in terms of a memory storage capacity, a computation processing speed, an ability to collect a training data set, and/or the like, the electronic device 100 may be limited compared to the server 1400. Accordingly, an operation requiring a large data storage and a large computation amount may be performed by the server 1400, and then required data and/or the AI model may be transmitted to the electronic device 100 through a communication network. Then, the electronic device 100 may perform a required operation quickly and easily without a large capacity memory and a processor having fast operation capability, by receiving and using the required data and/or the AI model through the server 1400.

In an embodiment of the disclosure, the server 1400 may include the neural network 1310 described above with reference to FIG. 13. In detail, the neural network 1310 included in the server 1400 may perform computations for the above-described emergency call sending operation.

The communication module 230 of the electronic device 200 communicates with an external device through a wireless communication network 1815. The external device may include the server 1400 or emergency call server 30 capable of performing at least one of computations required by the electronic device 100 or transmitting data required by the electronic device 200.

The communication module 230 includes at least one communication module, such as a short-range communication module, a wired communication module, a mobile communication module, or a broadcast receiving module. The communication module 230 includes a communication module capable of performing transmission and reception of data through a tuner for receiving broadcast, or a network conforming to a communication standard, such as Bluetooth, wireless local area network (WLAN) (e.g., Wi-Fi), wireless broadband (WiBro), World Interoperability for Microwave Access (WiMax), code-division multiple access (CDMA), wideband CDMA (WCDMA), Internet, 3G, 4G, 5G, and/or communication schemes using millimeter waves (mmWAVE).

For example, when the communication module 230 performs communication by using millimeter waves (mmWAVE), the communication module 230 may quickly transmit and receive a large amount of data. In detail, the vehicle 10 may improve its safety and/or user convenience by quickly receiving a large amount of data by using millimeter waves, and quickly providing data required for the safety of the vehicle 10 (e.g., data required for autonomous driving or data required for a navigation service), content for users (e.g., movies or music), and the like.

The communication module 230 may communicate with another device (e.g., the server 1400) positioned at a remote location through a communication network conforming to a communication standard, such as 3G, 4G, and/or 5G. Here, the communication module 230 that communicates with another device positioned at a remote location may be referred to as a 'long-range communication module'.

The communication module 1510 of the server 1400 may include at least one component that enables communication with the electronic device 100. A detailed configuration of the communication module 1510 corresponds to the above-described configuration of the communication module 230, and thus a detailed description thereof will be omitted.

For example, the communication module 1510 may communicate with another device (e.g., the electronic device 100) positioned at a remote location through a communication network conforming to a communication standard, such as Internet, 3G, 4G, and/or 5G.

The processor 1530 controls overall operations of the server 1400. For example, the processor 1530 may perform required operations by executing at least one of at least one instruction and programs of the server 1400.

A database (DB) 1550 may include a memory (not shown), and may store, in the memory, at least one of at least one instruction, program, and data required for the server 1400 to perform a certain operation. The DB 1550 may store pieces of data required by the server 1400 to perform computations according to a neural network.

In an embodiment of the disclosure, the server 1400 may store the neural network 1310 described above with reference to FIG. 13. The neural network 1310 may be stored in at least one of the processor 1530 or the DB 1550. The neural network 1310 included in the server 1400 may be a completely trained neural network.

In an embodiment of the disclosure, the server 1400 may execute the above-described emergency call sending operation by using a neural network included therein, and transmit data derived as a result of the execution to the communication module 230 of the electronic device 200 through the communication module 1510.

The server 1400 may transmit the completely trained neural network to the communication module 230 of the electronic device 200 through the communication module 1510. Then, the electronic device 100 may obtain and store the completely trained neural network, and obtain intended output data through the neural network.

FIG. 15 is a block diagram of a structure of a processor 215 included in the electronic device 100, according to some embodiments.

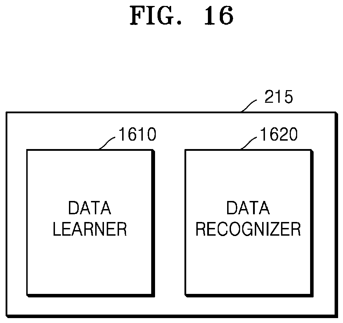

Referring to FIG. 16, the processor 215 according to some embodiments may include a data learner 1610 and a data recognizer 1620.

The data learner 1610 may learn a criterion for an emergency call sending operation.

For example, the data learner 1610 may learn a criterion regarding what data is used to determine whether sending an emergency call is needed and how to determine whether sending an emergency call is needed.

The data learner 1610 may obtain data that is to be used in learning, and may apply the obtained data to a data recognition model which will be described later, thereby learning the criterion for the emergency call sending operation.

The data recognizer 1620 may determine at least one of whether emergency call sending is needed, a first priority, a second priority, and a frequency band capable of transmitting emergency calls based on at least one of information related to the vehicle 10, information about surroundings of the vehicle 10, and information related to a network available at the current position of the vehicle 10.

The data recognizer 1620 may determine at least one of whether emergency call sending is needed, the first priority, the second priority, and the frequency band capable of transmitting emergency calls by using a trained data recognition model. A result value output by the data recognition model may be used to update the data recognition model.

At least one of the data learner 1610 and the data recognizer 1620 may be manufactured in the form of at least one hardware chip and may be mounted on the electronic device 100. For example, at least one of the data learner 1610 and the data recognizer 1620 may be manufactured in the form of a dedicated hardware chip for AI, or may be manufactured as a portion of an existing general-purpose processor (for example, a central processing unit (CPU) or an application processor (AP)) or a processor dedicated to graphics (for example, a graphics processing unit (GPU)) and may be mounted on the above-described electronic device 100.

The data learner 1610 and the data recognizer 1620 may be both mounted on a single electronic device 100, or may be respectively mounted on independent electronic devices. For example, one of the data learner 1610 and the data recognizer 1620 may be included in the electronic device 100, and the other may be included in the server 1400. The data learner 1610 and the data recognizer 1620 may provide model data established by the data learner 1610 to the data recognizer 1620, and data input to the data recognizer 1620 may be provided as additional training data to the data learner 1610, by wire or wirelessly.

At least one of the data learner 1610 and the data recognizer 1620 may be implemented as a software module. When at least one of the data learner 1610 and the data recognizer 1620 is implemented using a software module (or a program module including instructions), the software module may be stored in non-transitory computer readable media. In this case, the at least one software module may be provided by an operating system (OS) or by a certain application. Alternatively, some of the at least one software module may be provided by an OS and the others may be provided by a certain application.

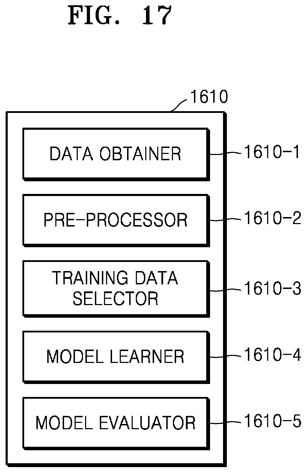

FIG. 17 is a block diagram of the data learner 1610, according to an embodiment.

Referring to FIG. 17, the data learner 1610 may include a data obtainer 1610-1, a pre-processor 1610-2, a training data selector 1610-3, a model learner 1610-4, and a model evaluator 1610-5.

The data obtainer 1610-1 may obtain data necessary for an emergency call sending operation.

The data obtainer 1610-1 may obtain data necessary for learning an emergency call sending operation.

The pre-processor 1610-2 may pre-process the data obtained for learning. The pre-processor 1610-2 may process the data into a preset format such that the model learner 1610-4, which will be described later, may use the data to perform learning for an emergency call sending operation.

The training data selector 1610-3 may select data necessary for learning from among pieces of pre-processed data. The selected data may be provided to the model learner 1610-4. The training data selector 1610-3 may select the data necessary for learning from among the pieces of pre-processed data, according to a preset criterion for an emergency call sending operation. The training data selector 1610-3 may select data according to a criterion previously set due to learning by the model learner 1610-4, which will be described later.

The model learner 1610-4 may learn a criterion regarding how to determine an emergency call sending operation. The model learner 1610-4 may learn a criterion regarding which training data is to be used for an emergency call sending operation.

The model learner 1610-4 may learn a data recognition model for use in an emergency call sending operation, by using the training data. In this case, the data recognition model may be a pre-established model. For example, the data recognition model may be a model previously established by receiving basic training data (for example, sample data).

The data recognition model may be established in consideration of, for example, an application field of a recognition model, a purpose of learning, or computer performance of a device. The data recognition model may be, for example, a model based on a neural network. For example, a model, such as a convolutional neural network (CNN), a deep neural network (DNN), a recurrent neural network (RNN), or a bidirectional recurrent DNN (BRDNN), may be used as the data recognition model, but embodiments are not limited thereto.

According to various embodiments, when a plurality of data recognition models that are pre-established exist, the model learner 1610-4 may determine a data recognition model having a high relationship between input training data and basic training data, as a data recognition model to be trained. In this case, the basic training data may be pre-classified for each type of data, and the data recognition model may be pre-established for each type of data. For example, the basic training data may be pre-classified according to various standards such as an area where the training data is generated, a time for which the training data is generated, a size of the training data, a genre of the training data, a generator of the training data, and a type of the object in the training data

The model learner 1610-4 may train the data recognition model by using a training algorithm including, for example, error back-propagation or gradient descent.

The model learner 1610-4 may train the data recognition model through supervised learning by using, for example, the training data as an input value. The model learner 1610-4 may train the data recognition model through unsupervised learning for finding a criterion for performing an emergency call sending operation, by self-learning the type of data necessary for an emergency call sending operation without supervision, for example. The model learner 1610-4 may train the data recognition model through, for example, reinforcement learning.

When the data recognition model is trained, the model learner 1610-4 may store the trained data recognition model. In this case, the model learner 1610-4 may store the trained data recognition model in the memory 205 of the electronic device 100 including the data recognizer 1620. Alternatively, the model learner 1610-4 may store the trained data recognition model in a memory of the server 1400 that is connected with the electronic device 100 via a wired or wireless network.

In this case, the memory that stores the trained data recognition model may also store, for example, a command or data related to at least one other component of the electronic device 100. The memory may also store software and/or a program. The program may include, for example, a kernel, a middleware, an application programming interface (API), and/or an application program (or an application).

When the model evaluator 1610-5 inputs evaluation data to the data recognition model and a recognition result that is output from the evaluation data does not satisfy a predetermined criterion, the model evaluator 1610-5 may enable the model learner 1610-4 to learn again. In this case, the evaluation data may be preset data for evaluating the data recognition model.

For example, when the number or percentage of pieces of evaluation data that provide inaccurate recognition results from among recognition results of the data recognition model with respect to the evaluation data exceeds a preset threshold, the model evaluator 1610-5 may evaluate that the predetermined criterion is not satisfied. For example, when the predetermined criterion is defined as 2% and the data recognition model outputs wrong recognition results for more than 20 pieces of evaluation data from among a total of 1000 pieces of evaluation data, the model evaluator 1610-5 may evaluate that the data recognition model is not appropriate.

When there are a plurality of trained data recognition models, the model evaluator 1610-5 may evaluate whether each of the plurality of trained data recognition models satisfies the predetermined criterion, and may determine, as a final data recognition model, a model that satisfies the predetermined criterion. In this case, when a plurality of models satisfy the predetermined criterion, the model evaluator 1610-5 may determine one preset model or a predetermined number of models in a descending order of evaluation scores as final data recognition models.

At least one of the data obtainer 1610-1, the pre-processor 1610-2, the training data selector 1610-3, the model learner 1610-4, and the model evaluator 1610-5 in the data learner 1610 may be manufactured in the form of at least one hardware chip and may be mounted on the electronic device 100. For example, at least one of the data obtainer 1610-1, the pre-processor 1610-2, the training data selector 1610-3, the model learner 1610-4, and the model evaluator 1610-5 may be manufactured in the form of a dedicated hardware chip for AI, or may be manufactured as a portion of an existing general-purpose processor (for example, a CPU or an AP) or a processor dedicated to graphics (for example, a GPU) and may be mounted on the electronic device 100.

The data obtainer 1610-1, the pre-processor 1610-2, the training data selector 1610-3, the model learner 1610-4, and the model evaluator 1610-5 may be all mounted on a single electronic device 100, or may be respectively mounted on independent electronic devices. For example, some of the data obtainer 1610-1, the pre-processor 1610-2, the training data selector 1610-3, the model learner 1610-4, and the model evaluator 1610-5 may be included in the electronic device 100, and the others may be included in the server 1400.

At least one of the data obtainer 1610-1, the pre-processor 1610-2, the training data selector 1610-3, the model learner 1610-4, and the model evaluator 1610-5 may be implemented as a software module. When at least one of the data obtainer 1610-1, the pre-processor 1610-2, the training data selector 1610-3, the model learner 1610-4, and the model evaluator 1610-5 is implemented as a software module (or a program module including instructions), the software module may be stored in a non-transitory computer-readable recording medium. In this case, the at least one software module may be provided by an OS or by a certain application. Alternatively, some of the at least one software module may be provided by an OS and the others may be provided by a certain application.

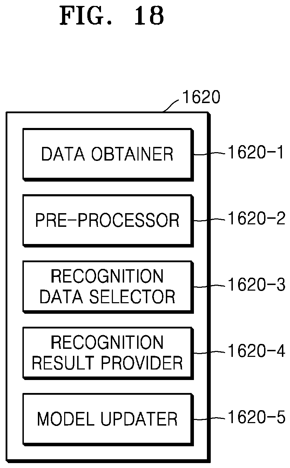

FIG. 18 is a block diagram of the data recognizer 1620, according to an embodiment.

Referring to FIG. 18, the data recognizer 1620 may include a data obtainer 1620-1, a pre-processor 1620-2, a recognition data selector 1620-3, a recognition result provider 1620-4, and a model refiner 1620-5.

The data obtainer 1620-1 may obtain data necessary for an emergency call sending operation, and the pre-processor 1620-2 may pre-process the obtained data. The pre-processor 1620-2 may process the obtained data in a preset format such that the recognition result provider 1620-4, which will be described later, may use the obtained data for an emergency call sending operation.

The recognition data selector 1620-3 may select data necessary for an emergency call sending operation, from among the pre-processed data. The selected data may be provided to the recognition result provider 1620-4. The recognition data selector 1620-3 may select data according to a criterion previously set due to learning by the model learner 1610-4.

The recognition result provider 1620-4 may perform an emergency call sending operation by applying the selected data to the data recognition model. The recognition result provider 1620-4 may provide a recognition result that conforms to a data recognition purpose. The recognition result provider 1620-4 may apply the selected data to the data recognition model by using the data selected by the recognition data selector 1620-3 as an input value. The recognition result may be determined by the data recognition model.

The model refiner 1620-5 may enable the data recognition model to be refined, based on an evaluation of a recognition result provided by the recognition result provider 1620-4. For example, the model refiner 1620-5 may enable the model learner 1610-4 to refine the data recognition model, by providing the recognition result provided by the recognition result provider 1620-4 to the model learner 1610-4.

At least one of the data obtainer 1620-1, the pre-processor 1620-2, the recognition data selector 1620-3, the recognition result provider 1620-4, and the model refiner 1620-5 within the data recognizer 1620 may be manufactured in the form of at least one hardware chip and may be mounted on the electronic device 100. For example, at least one of the data obtainer 1620-1, the pre-processor 1620-2, the recognition data selector 1620-3, the recognition result provider 1620-4, and the model refiner 1620-5 may be manufactured in the form of a dedicated hardware chip for AI, or may be manufactured as a portion of an existing general-purpose processor (for example, a CPU or an AP) or a processor dedicated to graphics (for example, a GPU) and may be mounted on the electronic device 100.

The data obtainer 1620-1, the pre-processor 1620-2, the recognition data selector 1620-3, the recognition result provider 1620-4, and the model refiner 1620-5 may be all mounted on a single electronic device 100, or may be respectively mounted on independent electronic devices. For example, some of the data obtainer 1620-1, the pre-processor 1620-2, the recognition data selector 1620-3, the recognition result provider 1620-4, and the model refiner 1620-5 may be included in the electronic device 100, and the others may be included in the server 1400.

At least one of the data obtainer 1620-1, the pre-processor 1620-2, the recognition data selector 1620-3, the recognition result provider 1620-4, and the model refiner 1620-5 may be implemented as a software module. When at least one of the data obtainer 1620-1, the pre-processor 1620-2, the recognition data selector 1620-3, the recognition result provider 1620-4, and the model refiner 1620-5 is implemented as a software module (or a program module including instructions), the software module may be stored in a non-transitory computer-readable recording medium. In this case, the at least one software module may be provided by an OS or by a certain application. Alternatively, some of the at least one software module may be provided by an OS and the others may be provided by a certain application.

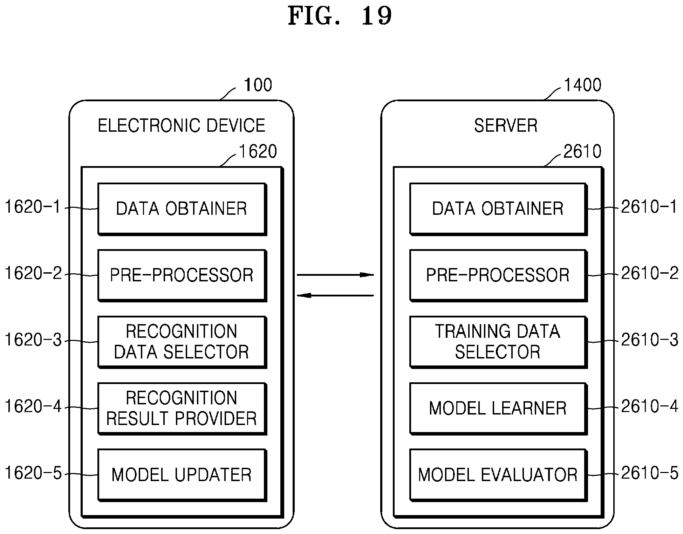

FIG. 19 is a block diagram illustrating an example where the electronic device 100 and the server 1400 interoperate to learn and recognize data, according to an embodiment.

Referring to FIG. 19, the server 1400 may learn a criterion for an emergency call sending operation, and the electronic device 100 may perform an emergency call sending operation, based on a result of the learning performed by the server 1400.

In this case, a model learner 2610 of the server 1400 may perform a function of the data learner 1610 of FIG. 17. The model learner 2610 of the server 1400 may learn a criterion regarding what data is used to determine a certain situation. The model learner 2610 may learn a criterion regarding how to determine at least one of whether emergency call sending is needed, the first priority, the second priority, and the frequency band capable of transmitting emergency calls by using data. The model learner 2610 may obtain data that is to be used in learning, and may apply the obtained data to a data recognition model, thereby learning the criterion for the emergency call sending operation.

The recognition result provider 1620-4 of the electronic device 100 may apply the data selected by the recognition data selector 1620-3 to a data recognition model generated by the server 1400, thereby performing the emergency call sending operation. For example, the recognition result provider 1620-4 may transmit the data selected by the recognition data selector 1620-3 to the server 1400, and may request the server 1400 to perform the emergency call sending operation by applying the data selected by the recognition data selector 1620-3 to a recognition model. The recognition result provider 1620-4 may receive result information of an operation performed by the server 1400 from the server 1400.

Alternatively, the recognition result provider 1620-4 of the electronic device 100 may receive the recognition model generated by the server 1400 from the server 1400, and may perform the emergency call sending operation by using the received recognition model. In this case, the recognition result provider 1620-4 of the electronic device 100 may perform the emergency call sending operation by applying the data selected by the recognition data selector 1620-3 to the data recognition model received from the server 1400.

The above-described embodiments of the disclosure can be written as computer-executable programs, and the written computer-executable programs can be stored in a machine-readable storage medium.

The machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While one or more embodiments of the disclosure have been described with reference to the figures, it will be understood by those of ordinary skill in the art that various changes in form and details may be made therein without departing from the spirit and scope as defined by the following claims.

## Claims

1. An electronic device mounted on a vehicle for transmitting an emergency call, the electronic device comprising:
a first communication module including a first radio frequency (RF) transceiver and a second RF transceiver; and
a controller configured to control an operation of the first communication module,
wherein the controller is configured to:
identify at least one network supporting the emergency call;
perform, according to a first priority, a first registration procedure using the first RF transceiver with respect to first frequency bands among a plurality of frequency bands available in the at least one network;
perform, according to the first priority, a second registration procedure using the second RF transceiver with respect to second frequency bands among the plurality of frequency bands; and
transmit the emergency call using a frequency band first identified as being capable of transmitting the emergency call via the first and second registration procedures based on the first priority among the first frequency bands and the second frequency bands.

2. The electronic device of claim 1, wherein, when a frequency band capable of transmitting the emergency call is not identified through the first registration procedure and the second registration procedure based on the first priority, the controller performs, according to the first priority, the first registration procedure using the first RF transceiver with respect to the second frequency bands and performs, according to the first priority, the second registration procedure using the second RF transceiver with respect to the first frequency bands.

3. The electronic device of claim 2, wherein, when a frequency band capable of transmitting the emergency call is not identified through the first registration procedure and the second registration procedure based on the first priority, the controller further performs the first registration procedure or the second registration procedure with respect to frequency bands different from the first frequency bands and the second frequency bands among frequency bands supported by the electronic device.

4. The electronic device of claim 1, wherein the controller, when a frequency band capable of transmitting the emergency call is not identified through the first registration procedure and the second registration procedure based on the first priority, determines a second priority, and performs, according to the second priority, the first registration procedure with respect to the second frequency bands, and performs, according to the second priority, the second registration procedure with respect to the first frequency bands.

5. The electronic device of claim 4, wherein the controller determines the second priority, based on a signal quality in the plurality of frequency bands, wherein the signal quality is confirmed through the first registration procedure and the second registration procedure based on the first priority.

6. The electronic device of claim 1, wherein
the at least one network identified as supporting the emergency call includes a first network and a second network,
the first frequency bands are available in the first network, and
the second frequency bands are available in the second network.

7. The electronic device of claim 6, wherein the controller is configured to:
perform, according to the first priority, the first registration procedure with respect to first frequency bands available in the first network provided by a first service provider; and
perform, according to the first priority, the second registration procedure with respect to second frequency bands available in the second network provided by a second service provider.

8. The electronic device of claim 1, wherein the controller performs the first registration procedure and the second registration procedure alternately.

9. The electronic device of claim 1, further comprising a second communication module including a third RF transceiver and a fourth RF transceiver,
wherein the controller is configured to:
perform, according to the first priority, the first registration procedure with respect to the first frequency bands among a plurality of frequency bands available in at least one network provided by a first service provider related to the first communication module, and performs, according to the first priority, the second registration procedure with respect to the second frequency bands among the plurality of frequency bands; and
perform, according to the first priority, a third registration procedure using the third RF transceiver with respect to third frequency bands among a plurality of frequency bands available in at least one network provided by a second service provider related to the second communication module, and performs, according to the first priority, a fourth registration procedure using the fourth RF transceiver with respect to the fourth frequency bands among the plurality of frequency bands.

10. The electronic device of claim 1, wherein, when a frequency band capable of transmitting the emergency call is not identified through the first registration procedure and the second registration procedure based on the first priority, the controller transmits a request to transmit the emergency call to a mobile device of a passenger of the vehicle.

11. The electronic device of claim 1, wherein the controller is configured to:
while being registered in a predetermined type of network, when it is determined that transmitting the emergency call is necessary, determine whether the predetermined type of network supports the emergency call; and
perform the first registration procedure and the second registration procedure based on the first priority, in response to the predetermined type of network not supporting the emergency call.

12. The electronic device of claim 11, wherein
the predetermined type of network includes a packet switched network, and
the at least one network includes a circuit switched network.

13. The electronic device of claim 1, wherein, when an emergency call with an emergency call server is connected, the controller transmits voice data of a passenger of the vehicle or environmental data of the vehicle to the emergency call server.

14. A method of transmitting an emergency call by an electronic device including a first radio frequency (RF) transceiver and a second RF transceiver, the method comprising:
identifying at least one network supporting the emergency call;
performing, according to a pre-determined first priority, a first registration procedure using the first RF transceiver with respect to first frequency bands among a plurality of frequency bands available in the at least one network;
performing, according to the pre-determined first priority, a second registration procedure using the second RF transceiver with respect to second frequency bands among the plurality of frequency bands; and
transmitting the emergency call using a frequency band first identified as being capable of transmitting the emergency call through the first and second registration procedures based on the first priority among the first frequency bands and the second frequency bands.

15. The method of claim 14, further comprising, when a frequency band capable of transmitting the emergency call is not identified through the first registration procedure and the second registration procedure based on the first priority, performing, according to the first priority, the first registration procedure with respect to the second frequency bands and performing, according to the first priority, the second registration procedure with respect to the first frequency bands.
